# EUROPÄISCHE PATENTSCHRIFT

(11) **EP 1 588 822 B1**
(45) Veröffentlichungstag und Bekanntmachung des Hinweises auf die Patenterteilung: **18.06.2008**
(21) Anmeldenummer: 05008251.0
(22) Anmeldetag: 15.04.2005
(51) Int. Cl.: B29C 45/17, G01M 3/26

(54) **Anordnung zum Feststellen von Leckstellen an Vorrichtungen zum Spritzgiessen, Vorrichtung zum Spritzgiessen sowie Verfahren zum Einstellen beziehungsweise Betreiben einer solchen Vorrichtung**
System for detecting leaks in an injection moulding device, injection moulding device and method for adjusting and using such a device
Dispositif de détection de fuites dans une presse à injecter, presse à injecter et procédé pour régler et utiliser une telle presse

(30) Priorität: 19.04.2004 DE 102004019407
(43) Veröffentlichungstag der Anmeldung: 26.10.2005
(73) Patentinhaber: wf plastic GmbH, 58507 Lüdenscheid (DE)
(72) Erfinder: Fein, Bernd, 58511 Lüdenscheid (DE)
(74) Vertreter: Graefe, Jörg

(56) Entgegenhaltungen:
- WO-A-93/18384
- GB-A- 1 294 915
- "INSTALLATION AND USER MANUAL AIRTECT LM2050 SERIES MICROPROCESSOR CONTROLLED LEAK MONITOR SYSTEM"[Online] Oktober 1999 (1999-10), Seiten 1-28, XP002340020 Gefunden im Internet: URL:http://www.airtect.com/LM2050.pdf> [gefunden am 2005-08-09]
- PATENT ABSTRACTS OF JAPAN Bd. 1996, Nr. 07, 31. Juli 1996 (1996-07-31) -& JP 08 057928 A (MITSUBISHI HEAVY IND LTD), 5. März 1996 (1996-03-05)

## Beschreibung

Die Erfindung betrifft eine Anordnung zum Feststellen von Leckstellen an Vorrichtungen zum Spritzgießen, insbesondere bei Vorrichtungen mit beheizten Mitteln zur Schmelzeverteilung in Spritzgießwerkzeugen, eine Vorrichtung zum Spritzgießen sowie ein Verfahren zum Einstellen beziehungsweise ein Verfahren zum Betreiben einer solchen Vorrichtung.

Leckstellen nach der Differenzdruckmethode zu messen ist beispielsweise aus der Druckschrift JP 8-57928 bekannt, die eine Anordnung mit zwei Drucksensoren offenbart. Von Nachteil ist dabei die hohe Anzahl der benötigten Sensoren. Auch der Druckschrift GB 1 294 915 ist zum Stand der Technik zu nennen.

Aus der Druckschrift mit der Veröffentlichungsnummer DE 693 02 469 T2 ist eine Anordnung zum Feststellen von Leckstellen an Vorrichtungen zum Spritzgießen bekannt. In den Fig. 2a, 2b, 2c dieser Druckschrift werden solche Anordnungen offenbart. Diese Anordnungen weisen jeweils einen Druckluftanschluss auf, über welchen die Anordnung mit Druckluft versorgt werden kann. Von diesem Druckluftanschluss führt eine Leitung über einen Druckregler und einen Drucksensor zu einer Düse. Diese Düse ist an einer potentiellen Leckstelle einer Vorrichtung zum Spritzgießen angeordnet. Sobald die Düse durch aus der Leckagestelle austretendes Spritzgussmaterial ganz oder teilweise verschlossen wird, ändert sich der Druck innerhalb der Leitung. Diese Druckänderung wird von dem Drucksensor registriert, der daraufhin eine Meldung an ein Mittel zum Steuern und/oder Regeln geben kann, um den Spritzgussvorgang zu unterbrechen.

Die in der Druckschrift mit der Veröffentlichungsnummer DE 693 02 469 T2 beschriebene Vorrichtung hat sich in der Vergangenheit als nicht geeignet erwiesen. Ein Problem liegt dabei an der oftmals nicht ausreichenden Zuverlässigkeit der Drucksensoren. Sind diese Drucksensoren zu empfindlich, reicht schon die Erwärmung oder das Abkühlen der Druckluftleitungen während des Spritzgussvorgangs aus, so dass der Sensor eine Unterbrechung des Spritzgussvorgangs auslöst. Ist dagegen der Sensor nicht sensibel genug, können kleine Spritzgussmaterialmengen, die an den Leckagepunkten austreten, nicht immer in ausreichendem Maße erfasst werden, um den Fehlerfall zu erkennen. Ein weiteres Problem liegt im hohen Luftverbrauch.

Aus der Druckschrift mit der Nummer US 6,182,501 B1 ist ferner eine Anordnung zum Überprüfen der Dichtigkeit eines Gefäßes bekannt. Das Gefäß wird dazu unter Druck gesetzt. Parallel dazu wird ein Referenzgefäß unter Druck gesetzt. Es wird dann beobachtet, ob das zu prüfende Gefäß einen Druckverlust hat und wie groß der Druckverlust im Vergleich zu dem Referenzgefäß ist. Die in dieser Druckschrift beschriebene Anordnung kann nicht dazu verwendet werden, Leckstellen von Vorrichtungen zum Spritzgießen zu erfassen und die Vorrichtungen zum Spritzgießen kontinuierlich zu überwachen. Die Druckschrift bietet daher keinen Anhaltspunkt zur Lösung der Probleme mit der eingangs genannten Anordnung.

Der Erfindung liegt dabei die Aufgabe zugrunde, eine Anordnung zum Feststellen von Leckstellen vorzuschlagen, die robuster ist als die aus der genannten Druckschrift bekannte Anordnung.

Diese Aufgabe wird erfindungsgemäß durch eine Anordnung gemäß Anspruch 1 gelöst. Weiterbildungen dieser Anordnung und eine Vorrichtung zum Spritzgießen sind in den auf Anspruch 1 zurückbezogenen Ansprüchen angegeben. Ferner ist in Anspruch 10 und 11 ein Verfahren zum Einstellen einer Vorrichtung mit einer solchen Anordnung beschrieben und in Anspruch 12 ein Verfahren zum Betreiben einer solchen Vorrichtung angegeben.

Eine erfindungsgemäße Vorrichtung weist demgemäß eine erste Druckluftleitung und eine zweite Druckluftleitung auf. Die Vorrichtung weist ferner einen gemeinsamen Druckluftanschluss auf, aus welchem die erste Druckluftleitung und die zweite Druckluftleitung mit Druckluft versorgt werden können. Eine dritte und eine vierte Druckluftleitung sind ferner vorgesehen und die erste Druckluftleitung verzweigt sich in diese dritte Druckluftleitung und in die vierte Druckluftleitung. Die dritte Druckluftleitung mündet in eine oder mehrere Austrittsöffnungen. Diese Austrittsöffnungen können dann an den potentiellen Leckstellen angeordnet werden und werden im Betrieb der Anordnung kontinuierlich mit Druckluft durchströmt. Eine fünfte Druckluftleitung und eine sechste Druckluftleitung sind ferner bei einer erfindungsgemäßen Anordnung vorgesehen. Die zweite Druckluftleitung verzweigt sich in diese fünfte Druckluftleitung und in die sechste Druckluftleitung. Eine erfindungsgemäße Anordnung weist ferner einen Sensor zum Erfassen eines Druckunterschieds zwischen den in der vierten Druckluftleitung und der fünften Druckluftleitung herrschenden Drücken auf. Ein Druckeinstellmittel zum Einstellen des Drucks in der sechsten Druckluftleitung und/oder ein oder mehrere Austrittsöffnungen, in welche die sechste Druckluftleitung mündet, sind ebenfalls bei einer erfindungsgemäßen Anordnung vorgesehen.
Anstelle von Druckluft kann auch ein anderes geeignetes Fluid verwendet werden.

Gemäß der Erfindung kann in der ersten und/oder zweiten Druckluftleitung je eine Blende eingesetzt sein.

Als Austrittsöffnungen können Düsen vorgesehen sein. Die Austrittsöffnungen können ferner an Enden von weiteren Leitungen, zum Beispiel von Kapillaren vorgesehen sein, wobei diese weiteren Leitungen von der dritten Druckluftleitung abzweigen. Die weiteren Leitungen können dabei auch durch Kanäle in einem Spritzgießwerkzeug gebildet werden. Die Austrittsöffnungen können auch durch Bohrungen in der dritten Druckluftleitung gebildet sein. Vorzugsweise ist zumindest die dritte Druckluftleitung ein Rohr oder ein Schlauch.

Eine erfindungsgemäße Vorrichtung zum Spritzgießen, insbesondere zum Kunststoffspritzgießen, weist eine der vorgenannten erfindungsgemäßen Anordnungen auf. Eine solche Vorrichtung kann ein Mittel zum Steuern und/oder Regeln umfassen. Mit diesem Mittel zum Steuern und/oder Regeln kann der Sensor zum Erfassen des Druckunterschieds verbunden sein.

Die Austrittsöffnungen einer erfindungsgemäßen Vorrichtung können zumindest teilweise im Bereich von Verbindungsstellen des Leitungssystems für eine Spritzgussmasse angeordnet sein. Diese Verbindungsstellen sind potentielle Leckstellen. Weitere potentielle Leckstellen sind die Verbindungsstellen des Leitungssystems mit dem Spritzgießwerkzeug und/oder der Spritzgießmaschine. Auch dort können die Austrittsöffnungen angeordnet sein. Eine weitere potentielle Leckstelle liegt im Bereich des Anschnitts an das Formteil.

Ein erfindungsgemäßes Verfahren zum Einstellen einer erfindungsgemäßen Vorrichtung kann so ausgestaltet sein, dass zunächst die Austrittsöffnungen zum Einstellen so angeordnet werden, dass der von dem Sensor zum Erfassen des Druckunterschieds bei einer Beaufschlagung der Druckluftleitungen erfasste Druckunterschied gleich Null ist oder einen vorbestimmten Wert hat. Alternativ kann bei einer anderen Ausführung der Vorrichtung mittels des Druckeinstellmittels der Druck in der sechsten Druckluftleitung so eingestellt werden, dass der von dem Sensor zum Erfassen des Druckunterschieds bei der Beaufschlagung der Druckluftleitungen erfasste Druckunterschied gleich Null ist oder einen vorbestimmten Wert hat.

Bei einem erfindungsgemäßen Verfahren zum Betreiben einer erfindungsgemäßen Vorrichtung kann, sobald der Sensor zum Erfassen des Druckunterschieds einen Druckunterschied über einen Toleranzbereich abweichend von Null oder dem vorbestimmten Wert anzeigt, das Mittel zum Steuern und/oder Regeln einen laufenden Spritzgießvorgang unterbrechen und/oder eine Leckage mit einem Anzeigemittel anzeigen.

Ausführungsbeispiele für eine erfindungsgemäße Anordnung sind anhand der Zeichnung näher beschrieben. Darin zeigt
- Fig. 1.: einen Schaltplan einer ersten erfindungsgemäßen Anordnung mit einem Druckeinstellmittel und
- Fig. 2: eine zweite erfindungsgemäße Anordnung mit weiteren Düsen.

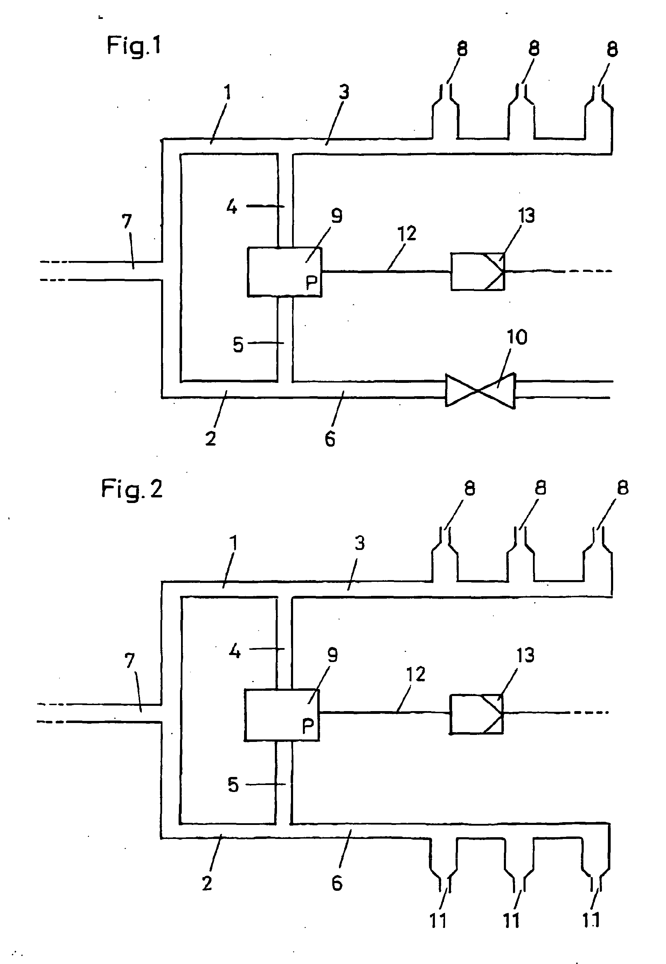

Die in den Figuren 1 und 2 dargestellten erfindungsgemäßen Anordnungen weisen eine Vielzahl von Gemeinsamkeiten auf. Es werden daher zunächst anhand der Fig. 1 die gemeinsamen Merkmale beschrieben, bevor auf die Unterschiede der Anordnung gemäß Fig. 2 zu der Anordnung gemäß Fig. 1 eingegangen wird.

Die erfindungsgemäßen Anordnungen weisen je eine erste Druckluftleitung 1 und eine zweite Druckluftleitung 2 auf, die über einen gemeinsamen Druckluftanschluss 7 mit Druckluft beaufschlagbar sind. Der gemeinsame Druckluftanschluss 7 kann mit einem Drucklufttank, mit einem Druckerzeugungsaggregat (Pumpe) oder mit in einem Werk vorhandenen Druckluftversorgungsleitungsnetz verbunden sein.

Von dem gemeinsamen Druckluftanschluss 7 ausgehend wird Druckluft über die erste Druckluftleitung 1 zu einem Verzweigungspunkt geleitet, an welchem die erste Druckluftleitung 1 in eine dritte Druckluftleitung 3 und in eine vierte Druckluftleitung 4 verzweigt. An die dritte Druckluftleitung 3 sind Düsen 8 angeschlossen, die im Bereich der möglichen Leckstellen einer Vorrichtung zum Spritzgießen angeordnet sind.

Die vierte Druckluftleitung 4 führt dagegen zu einem Sensor 9 zum Erfassen eines Druckunterschieds.

Die zweite Druckluftleitung 2 führt ebenfalls von dem gemeinsamen Druckluftanschluss 7 zu einem Verzweigungspunkt. An dem Verzweigungspunkt verzweigt die Druckluftleitung 2 in eine fünfte Druckluftleitung 5 und in eine sechste Druckluftleitung 6. Die sechste Druckluftleitung führt bei der Anordnung gemäß Fig. 1 zu einem Druckeinstellmittel 10, mit welchem der Druck in dieser sechsten Druckluftleitung 6 eingestellt werden kann.

Die fünfte Druckluftleitung 5 führt dagegen, wie auch schon die vierte Druckluftleitung 4, zu dem Sensor 9 zum Erfassen des Druckunterschieds. Der Druckunterschied, der mit dem Sensor 9 erfasst wird, ist der Druckunterschied, der zwischen den Drücken in der vierten Druckluftleitung 4 und der fünften Druckluftleitung 5 vorliegt.

Durch das Einstellen des Drucks in der sechsten Druckluftleitung 6 mittels des Druckeinstellmittels 10 kann auch der Druck in der fünften Druckluftleitung 5 verändert werden. Dieses wird bei einem Einstellen der Anordnung ausgenutzt. Die Anordnung wird, damit sie zum Erfassen von Leckstellen verwendet werden kann, vorteilhaft so eingestellt, dass in der vierten Druckluftleitung 4 und in der fünften Druckluftleitung 5 der gleiche Druck herrscht. Der Druckunterschied zwischen der vierten Druckluftleitung 4 und der fünften Druckluftleitung 5 ist dann Null. Gegebenenfalls ist es ausreichend, wenn der Druckunterschied zwischen der vierten Druckluftleitung 4 und der fünften Druckluftleitung 5 so eingestellt ist, dass er einen vorbestimmten Wert hat. Es herrscht dann annähernd ein Druckgleichgewicht zwischen der vierten Druckluftleitung 4 und der fünften Druckluftleitung 5.

So wie sich mittels des Druckeinstellmittels 10 ein Druckgleichgewicht zwischen der vierten Druckluftleitung 4 und der fünften Druckluftleitung 5 einstellen lässt, lässt sich auch durch eine Änderung des Drucks in der Druckluftleitung 3 der Druckunterschied zwischen der vierten Druckluftleitung 4 und der fünften Druckluftleitung 5 beeinflussen. Wird in der Druckluftleitung 3 der Druck verändert, wirkt sich dies unmittelbar auch auf die vierte Druckluftleitung 4 aus. Tritt nun an den möglichen Leckagestellen der Vorrichtung zum Spritzgießen die Spritzgussmasse aus, beeinflusst dies das Strömungsverhalten der aus den Düsen 8 austretenden Druckluft. Die Düsen können nämlich ganz oder zum Teil verschlossen werden, was unmittelbar eine Rückwirkung auf den Druck in der dritten Druckluftleitung 3 hat.

Ist die Anordnung vor der Durchführung des Spritzgussvorgangs, d. h. vor dem Betreiben der Vorrichtung zum Spritzgießen so abgestimmt worden, dass der Sensor zum Messen des Druckunterschieds keinen Druckunterschied oder einen vorbestimmten Druckunterschied zwischen der vierten Druckluftleitung 4 und der fünften Druckluftleitung 5 erfasst, bewirkt das Austreten der Spritzgussmasse aus den Leckagestellen die Erfassung eines veränderten Druckunterschieds des Sensors 9. Der Sensor 9 leitet das erfasste Signal über eine Leitung 12 an ein Mittel 13 zum Steuern und/oder Regeln weiter, welches dann entweder den Spritzgussvorgang unterbricht oder zumindest das Lecken der Vorrichtung anzeigt.

Im Unterschied zu der in Fig. 1 dargestellten Anordnung weist die in Fig. 2 dargestellte Anordnung das Druckeinstellmittel nicht auf. Stattdessen sind an die sechste Druckluftleitung weitere Düsen 11 angeschlossen. Diese weiteren Düsen 11 sind ebenfalls im Bereich möglicher Leckagestellen der Vorrichtung zum Spritzgießen angeordnet. Die weiteren Düsen 11 können dabei so in den Bereich der Leckagestellen angeordnet sein, dass kein Druckunterschied zwischen der vierten Druckluftleitung und der fünften Druckluftleitung besteht. Gegebenenfalls ist aber auch ein vorgegebener Wert des Druckunterschieds zulässig. Ändert sich nun aufgrund einer Leckage der Vorrichtung zum Spritzgießen und eines dadurch bewirkten ganzen oder teilweisen Verschließens der Düsen 8 oder der weiteren Düsen 11 der von dem Sensor 9 erfasste Druckunterschied, meldet der Sensor 9 diesen geänderten Druckunterschied über die Leitung 12 an das Mittel 13 zum Steuern und/oder Regeln, welches daraufhin den Spritzvorgang unterbricht und/oder eine Warnung an das Bedienpersonal ausgibt.

Im übrigen ist es auch möglich, in einer alternativen Anordnung zu der in der Fig. 2 dargestellten Anordnung in der sechsten Druckluftleitung 6 zusätzlich zu den weiteren Düsen 11 ein Druckeinstellmittel anzuordnen, mit welchem der Druck innerhalb der sechsten Druckluftleitung eingestellt werden kann.

## Patentansprüche

1. Anordnung zum Feststellen von Leckstellen an Vorrichtungen zum Spritzgießen, wobei die Anordnung
- eine erste Druckluftleitung (1) und eine zweite Druckluftleitung (2) umfasst;
- einen gemeinsamen Druckluftanschluss (7) umfasst, aus welchem die erste Druckluftleitung (1) und die zweite Druckluftleitung (2) mit Druckluft beaufschlagbar sind,
- eine dritte Druckluftleitung (3) und eine vierte Druckluftleitung (4) umfasst, in die sich die erste Druckluftleitung (1) verzweigt,
- eine oder mehrere Austrittsöffnungen (8) umfasst, in welche die dritte Druckluftleitung (3) mündet, wobei die Austrittsöffnungen im Betrieb der Anordnung kontinuierlich von der Druckluft durchströmt werden,
- eine fünfte Druckluftleitung (5) und eine sechste Druckluftleitung (6) umfasst, in die sich die zweite Druckluftleitung (2) verzweigt;
- einen Sensor (9) zum Erfassen eines Druckunterschieds zwischen den in der vierten Druckluftleitung (4) und der fünften Druckluftleitung (5) herrschenden Drücken umfasst,
- ein Druckeinstellmittel (10) zum Einstellen des Drucks in der sechsten Druckluftleitung (6) und/oder eine oder mehrere Austrittsöffnungen z.B. Düsen (11) umfasst, in welchen die sechste Druckluftleitung (6) mündet,
**dadurch gekennzeichnet, dass**
die erste Druckluftleitung (1) und die zweite Druckluftleitung (2) unmittelbar an den gemeinsamen Druckluftanschluss angeschlossen sind.

2. Anordnung nach Anspruch 1, **dadurch gekennzeichnet, dass** das Druckeinstellmittel (10) eine Blendenscheibe umfasst.

3. Anordnung nach Anspruch 1 oder 2, **dadurch gekennzeichnet, dass** das Druckeinstellmittel (10) ein Ventil umfasst.

4. Anordnung nach einem der vorhergehenden Ansprüche, **dadurch gekennzeichnet, dass** die Anordnung ein Mittel zum Steuern und/oder Regeln des Drucks beziehungsweise Druckflusses am gemeinsamen Druckluftanschluss (7) und/oder in den **Druckluftleitungen umfasst.**

5. Anordnung nach einem der Ansprüche 1 bis 4, **dadurch gekennzeichnet, dass** die Austrittsöffnungen Düsen (8) sind.

6. Anordnung nach einem der Ansprüche 1 bis 5, **dadurch gekennzeichnet, dass** die Austrittsöffnungen an Enden von weiteren Leitungen angeordnet sind, die von der dritten Druckluftleitung (3) abzweigen.

7. Anordnung nach Anspruch 6, **dadurch gekennzeichnet, dass** die weiteren Leitungen Kanäle oder Röhrchen in einem Spritzgießwerkzeug sind.

8. Anordnung nach einem der Ansprüche 1 bis 7, **dadurch gekennzeichnet, dass** die erste, zweite, dritte, vierte, fünfte und/oder sechste Druckluftleitung durch einen Schlauch oder ein Rohr gebildet sind.

9. Anordnung nach Anspruch 8, **dadurch gekennzeichnet, dass** die Austrittsöffnungen (8) Bohrungen, insbesondere Querbohrungen in der dritten Leitung sind.

10. Vorrichtung zum Spritzgießen, insbesondere zum Kunststoff-Spritzgießen, **dadurch gekennzeichnet, dass** die Vorrichtung eine Anordnung nach einem der Ansprüche 1 bis 9 umfasst.

11. Vorrichtung nach Anspruch 10, **dadurch gekennzeichnet, dass** die Vorrichtung ein Mittel (13) zum Steuern und/oder Regeln umfasst.

12. Vorrichtung nach Anspruch 11, **dadurch gekennzeichnet, dass** das Mittel (13) zum Steuern und/oder Regeln mit dem Sensor (9) zum Erfassen des Druckunterschieds verbunden ist.

13. Vorrichtung nach einem der Ansprüche 10 bis 12, **dadurch gekennzeichnet, dass** die Austrittsöffnungen (8, 11) zumindest teilweise im Bereich eines Leitungssystems beziehungsweise im Bereich von Verbindungsstellen eines Leitungssystems für eine Spritzgussmasse angeordnet sind.

14. Vorrichtung nach einem der Ansprüche 10 bis 13, **dadurch gekennzeichnet, dass** die Austrittsöffnungen (8, 11) zumindest teilweise im Bereich von Verbindungsstellen des Leitungssystems mit einem Spritzgießwerkzeug oder einer Spritzgießmaschine angeordnet sind.

15. Verfahren zum Einstellen einer Vorrichtung nach einem der Ansprüche 10 bis 14, **dadurch gekennzeichnet, dass** die Austrittsöffnungen (8, 11) zum Einstellen so ausgeführt und/oder angeordnet werden, dass der von dem Sensor (9) zum Erfassen des Druckunterschieds bei einer Beaufschlagung der Druckluftleitungen (1 bis 6) erfasste Druckunterschied gleich Null ist oder einen vorbestimmten Wert hat.

16. Verfahren nach dem Oberbegriff des Anspruchs 15, **dadurch gekennzeichnet, dass** mittels des Druckeinstellmittels (10) der Druck in der sechsten Druckluftleitung (6) so eingestellt wird, dass der bei der Beaufschlagung der Druckluftleitungen (1 bis 6) erfasste Druckunterschied gleich Null ist oder einen vorbestimmten Wert hat.

17. Verfahren zum Betreiben einer Vorrichtung nach einem der Ansprüche 10 bis 16, **dadurch gekennzeichnet, dass**, sobald der Sensor (9) zum Erfassen des Druckunterschieds einen Druckunterschied Ober einen Toleranzbereich abweichend von Null oder dem vorbestimmten Wert anzeigt, das Mittel (13) zum Steuern und/oder Regeln einen laufenden Spritzgießvorgang unterbricht und/oder eine Leckage anzeigt.

## Claims

1. Arrangement for detecting leaks in injection-moulding devices, wherein the arrangement
- comprises a first compressed air line (1) and a second compressed air line (2);
- comprises a common compressed air connection (7) from which the first compressed air line (1) and the second compressed air line (2) can be charged with compressed air,
- comprises a third compressed air line (3) and a fourth compressed air line (4), into which the first compressed air line (1) branches,
- comprises one or more outlet openings (8) into which the third compressed air line (3) opens, the outlet openings being continuously flowed through by the compressed air during the operation of the arrangement,
- comprises a fifth compressed air line (5) and a sixth compressed air line (6), into which the second compressed air line (2) branches;
- comprises a sensor (9) for detecting a pressure difference between the pressures prevailing in the fourth compressed air line (4) and the fifth compressed air line (5),
- comprises a pressure-adjusting means (10) for adjusting the pressure in the sixth compressed air line (6), and/or one or more outlet openings, for example nozzles (11), into which the sixth compressed air line (6) opens,
**characterized in that**
the first compressed air line (1) and the second compressed air line (2) are directly connected to the common compressed air connection.

2. Arrangement according to Claim 1, **characterized in that** the pressure-adjusting means (10) comprises a screening disc.

3. Arrangement according to Claim 1 or 2, **characterized in that** the pressure-adjusting means (10) comprises a valve.

4. Arrangement according to one of the preceding claims, **characterized in that** the arrangement comprises a means for controlling and/or regulating the pressure or pressure flux at the common compressed air outlet connection (7) and/or in the compressed air lines.

5. Arrangement according to one of Claims 1 to 4, **characterized in that** the outlet openings are nozzles (8).

6. Arrangement according to one of Claims 1 to 5, **characterized in that** the outlet openings are arranged at ends of further lines which branch off from the third compressed air line (3).

7. Arrangement according to Claim 6, **characterized in that** the further lines are channels or small-bore tubes in an injection mould.

8. Arrangement according to one of Claims 1 to 7, **characterized in that** the first, second, third, fourth, fifth and/or sixth compressed air line(s) is/are formed by a hose or tube.

9. Arrangement according to Claim 8, **characterized in that** the outlet openings (8) are bores, in particular transverse bores in the third line.

10. Injection-moulding device, in particular for injection moulding of plastics, **characterized in that** the device comprises an arrangement according to one of Claims 1 to 9.

11. Device according to Claim 10, **characterized in that** the device comprises a control and/or regulating means (13).

12. Device according to Claim 11, **characterized in that** the control and/or regulating means (13) is connected to the sensor (9) for detecting the pressure difference.

13. Device according to one of Claims 10 to 12, **characterized in that** at least some of the outlet openings (8, 11) are arranged in the region of a line system or in the region of connecting points of a line system for an injection-moulding compound.

14. Device according to one of Claims 10 to 13, **characterized in that** at least some of the outlet openings (8, 11) are arranged in the region of connecting points of the line system to an injection mould or an injection-moulding machine.

15. Method for adjusting a device according to one of Claims 10 to 14, **characterized in that** the outlet openings (8, 11) are designed and/or arranged to be adjusted in such a manner that the pressure difference detected by the sensor (9) for detecting the pressure difference when the compressed air lines (1 to 6) are charged is equal to zero or has a predetermined value.

16. Method according to the precharacterizing clause of Claim 15, **characterized in that** the pressure in the sixth compressed air line (6) is adjusted by means of the pressure-adjusting means (10) in such a manner that the pressure difference detected when the compressed air lines (1 to 6) are charged is equal to zero or has a predetermined value.

17. Method for using a device according to one of Claims 10 to 16, **characterized in that** as soon as the sensor (9) for detecting the pressure difference indicates a pressure difference differing from zero or the predetermined value over a range of tolerances, the control and/or regulating means (13) interrupts a current injection-moulding operation and/or indicates a leakage.

## Revendications

1. Agencement pour détecter des fuites dans des dispositifs de moulage par injection, l'agencement comprenant :
- une première conduite d'air sous pression (1) et une deuxième conduite d'air sous pression (2) ;
- un raccord d'air sous pression commun (7), depuis lequel la première conduite d'air sous pression (1) et la deuxième conduite d'air sous pression (2) peuvent être sollicitées en air sous pression,
- une troisième conduite d'air sous pression (3) et une quatrième conduite d'air sous pression (4), en lesquelles la première conduite d'air sous pression (1) se divise,
- une ou plusieurs ouvertures de sortie (8), dans lesquelles la troisième conduite d'air sous pression (3) débouche, les ouvertures de sortie étant continuellement parcourues par l'air sous pression pendant le fonctionnement de l'agencement,
- une cinquième conduite d'air sous pression (5) et une sixième conduite d'air sous pression (6) en lesquelles la deuxième conduite d'air sous pression (2) se divise,
- un capteur (9) pour détecter une différence de pression entre les pressions régnant dans la quatrième conduite d'air sous pression (4) et la cinquième conduite d'air sous pression (5),
- un moyen d'ajustement de la pression (10) pour ajuster la pression dans la sixième conduite d'air sous pression (6) et/ou une ou plusieurs ouvertures de sortie, par exemple des buses (11), dans lesquelles débouche la sixième conduite d'air sous pression (6),
**caractérisé en ce que**
la première conduite d'air sous pression (1) et la deuxième conduite d'air sous pression (2) sont directement raccordées au raccord d'air sous pression commun.

2. Agencement selon la revendication 1, **caractérisé en ce que** le moyen d'ajustement de la pression (10) comprend un disque à diaphragme.

3. Agencement selon la revendication 1 ou 2, **caractérisé en ce que** le moyen d'ajustement de la pression (10) comprend une soupape.

4. Agencement selon l'une quelconque des revendications précédentes, **caractérisé en ce que** l'agencement comprend un moyen pour commander et/ou réguler la pression ou le flux de pression au niveau du raccord d'air sous pression commun (7) et/ou dans les conduites d'air sous pression.

5. Agencement selon l'une quelconque des revendications 1 à 4, **caractérisé en ce que** les ouvertures de sortie sont des buses (8).

6. Agencement selon l'une quelconque des revendications 1 à 5, **caractérisé en ce que** les ouvertures de sortie sont disposées aux extrémités d'autres conduites, qui partent de la troisième conduite d'air sous pression (3).

7. Agencement selon la revendication 6, **caractérisé en ce que** les autres conduites sont des canaux ou des tubes dans un outil de moulage par injection.

8. Agencement selon l'une quelconque des revendications 1 à 7, **caractérisé en ce que** la première, deuxième, troisième, quatrième, cinquième et/ou sixième conduites d'air sous pression sont formées par un tuyau souple ou dur.

9. Agencement selon la revendication 8, **caractérisé en ce que** les ouvertures de sortie (8) sont des alésages, notamment des alésages transversaux dans la troisième conduite.

10. Dispositif de moulage par injection, notamment pour le moulage par injection de plastique, **caractérisé en ce que** le dispositif comprend un agencement selon l'une quelconque des revendications 1 à 9.

11. Dispositif selon la revendication 10, **caractérisé en ce que** le dispositif comprend un moyen (13) de commande et/ou de régulation.

12. Dispositif selon la revendication 11, **caractérisé en ce que** le moyen (13) de commande et/ou de régulation est connecté au capteur (9) pour détecter la différence de pression.

13. Dispositif selon l'une quelconque des revendications 10 à 12, **caractérisé en ce que** les ouvertures de sortie (8, 11) sont disposées au moins en partie dans la région d'un système de conduite ou dans la région de points de connexion d'un système de conduite pour une composition de moulage par injection.

14. Dispositif selon l'une quelconque des revendications 10 à 13, **caractérisé en ce que** les ouvertures de sortie (8, 11) sont disposées au moins en partie dans la région de points de connexion du système de conduite à un outil de moulage par injection ou une machine de moulage par injection.

15. Procédé pour ajuster un dispositif selon l'une quelconque des revendications 10 à 14, **caractérisé en ce que** les ouvertures de sortie (8, 11) pour l'ajustement sont réalisées et/ou disposées de telle sorte que la différence de pression détectée par le capteur (9) pour détecter la différence de pression en cas de sollicitation des conduites d'air sous pression (1 à 6) est égale à zéro ou a une valeur prédéterminée.

16. Procédé selon le préambule de la revendication 15, **caractérisé en ce que** la pression dans la sixième conduite d'air sous pression (6) est ajustée au moyen du moyen d'ajustement de la pression (10) de telle sorte que la différence de pression détectée lors de la sollicitation des conduites d'air sous pression (1 à 5) est égale à zéro ou à une valeur prédéterminée.

17. Procédé pour faire fonctionner un dispositif selon l'une quelconque des revendications 10 à 16, **caractérisé en ce que** dès que le capteur (9) pour détecter la différence de pression indique une différence de pression s'écartant de zéro ou de la valeur prédéterminée au-delà d'une plage de tolérance, le moyen (13) de commande et/ou de régulation interrompt une opération de moulage par injection en cours et/ou indique une fuite.
